# EUROPÄISCHE PATENTANMELDUNG

(11) **EP 0 875 426 A2**
(43) Veröffentlichungstag der Anmeldung: **04.11.1998**
(21) Anmeldenummer: 98106128.6
(22) Anmeldetag: 03.04.1998
(51) Int. Cl.: B60R 21/22, B60R 21/24

(54) **Airbagvorhang, insbesondere für eine Fahrzeugscheibe**

(30) Priorität: 30.04.1997 DE 19718203
(71) Anmelder: DAIMLER-BENZ AKTIENGESELLSCHAFT, 70567 Stuttgart (DE)
(72) Erfinder: Tschäschke, Ulrich, 71139 Ehningen (DE)

(57) **Zusammenfassung**

Ein Airbagvorhang (2), insbesondere für eine Fahrzeugscheibe (1), umfaßt mehrere nebeneinander angeordnete, voneinander beabstandete, gasbefüllbaren röhrenförmige Kammern (10) mit nach der Gasbefüllung weitestgehend kreisrundem Querschnitt. Der Airbagvorhang spannt sich in Wirkstellung gasbefüllt zwischen zwei seitlichen Befestigungsstellen (5,6) auf, und die Kammern, die von einer beide Befestigungsstellen miteinander verbindenden Spannungslinie (7) gekreuzt werden, sind jeweils im Kreuzungsbereich mit einer Ausbauchung ausgebildet, welche einen etwa in Richtung der Spannungslinie orientierten, ovalen Querschnitt (12) ergibt.

## Beschreibung

Die Erfindung betrifft einen Airbagvorhang, insbesondere für eine Fahrzeugscheibe, gemäß dem Oberbegriff des Anspruches 1.

Aus der DE 22 22 621 A1, die im Oberbegriff des Anspruches 1 berücksichtigt ist, ist ein mit Gas befüllbarer Airbagvorhang bekannt, in dem durch eine linienförmige Verbindung der beiden aufeinanderliegenden Vorhangabschnitte rohrförmige, gasbefüllbare Kammern ausgebildet sind. Die Kammern weisen in der gasbefüllten Wirkstellung über ihre Längserstreckung weitgehend denselben kreisrunden Querschnitt auf, durch welchen ein maximales Energieaufnahmevermögen bei der Belastung durch den Insassen ermöglicht ist. Eine Festlegung des Airbagvorhanges in seiner Wirkstellung, durch die dieser durch den anprallenden Insassen nicht aus seiner schützend abdeckenden Lage verdrängt werden kann, ist hier nicht berücksichtigt.

Zum allgemeinen Hintergrund einen Airbag betreffend, der in seiner Wirkstellung durch zusätzliche Haltemittel gehalten ist, wird noch auf folgende Druckschriften verwiesen: DE 43 07 175 A1, DE 42 38 427 A1, DE 92 11 423 U1 und DE 41 37 749 A1.

Die Aufgabe der Erfindung besteht darin, einen gattungsgemäßen Airbagvorhang in seiner Wirkstellung gasbefüllt sicher in seiner Schutzposition zu halten.

Die Aufgabe wird durch die kennzeichnenden Merkmale des Patentanspruches 1 gelöst.

Ein derartiger Airbagvorhang liegt üblicherweise zusammengefaßt verstaut entlang einer Kante der Fahrzeugscheibe und wird beim Crash mittels des Gases aus einem aktivierten Gasgenerator oder Gasspeicher befüllt und dadurch in seine Wirkstellung vor die Fahrzeugscheibe überführt. Er kann aber auch innen am Dach in Fahrzeuquerrichtung angeordnet, sich vor einem Insassen ausbreiten. Dabei hat ein Airbagvorhang, der im Gegensatz zu einem einkammerigen Airbag einzelne, voneinander gasdicht getrennte Kammern aufweist, den Vorteil, daß der Airbagvorhang mit einer geringeren Gasmenge befüllt werden muß, was für den Seitenaufprall besonders günstig in kürzerer Zeit und für den Insassen schonender mit geringerem Gasdruck zu erreichen ist. Ein durch die Begrenzungslinien einer Kammer herbeigeführter, kreisrunder gasbefüllter Querschnitt führt dabei zu einem maximalen Energieaufnahmevermögen bei der Belastung der Kammern durch den Insassen.

Damit der Airbagvorhang aus seiner Wirkstellung im Fahrzeuginnenraum vor der Fahrzeugscheibe durch den anprallenden Insassen nicht verschoben werden kann, sind die Vorhangseiten an der Karosserie bzw. der Fahrzeuginnenverkleidung befestigt, wobei zwischen beidseitigen Befestigungsstellen durch die Gasbefüllung der Kammern eine Spannungslinie entsteht, und der Airbagvorhang gespannt zwischen den Befestigungsstellen und nahe der Fahrzeugscheibe gehalten wird.

Auf dieser Spannungslinie sind die Kammern durch den Verlauf der die Kammern begrenzenden Begrenzungslinien mit einer größeren Breite ausgebildet, wodurch sich in diesem Bereich ein ovaler Querschnitt der Kammern in Richtung der Vorhangfläche ausbildet, durch die eine größere Spannkraft zwischen den Befestigungsstellen herbeigeführt werden kann, ohne die kreisrunde Querschnittsform der anschließenden Kammerbereiche zu beeinträchtigen.

Durch diese individuelle Ausbildung der Kammern wird im Aufprallbereich des Insassen eine optimale Energieaufnahme durch die kreisrunde Querschnittsform jeder Kammer beibehalten, und kann dennoch entlang der Spannungslinie eine maximale Spannung in den Airbagvorhang eingeleitet werden, durch die der Airbagvorhang sicher in seiner Wirkstellung gehalten wird.

Die Wirkstellung des Airbagvorhanges kann dann besonders sicher fixiert werden, wenn die Spannungslinie unterhalb des Kopfschwerpunktes eines sitzenden Insassen verlaufend vorgesehen wird.

Die formgebenden Begrenzungslinien der Kammern können durch ein Vernähen oder verweben der beiden gegenüberliegenden Airbagwände einfach hergestellt werden.

Weitere Vorteile und Ausgestaltungen gehen aus den Unteransprüchen und der Beschreibung hervor.

Die Erfindung ist nachstehend anhand einer Zeichnung näher beschrieben.

Es zeigen:
- Fig. 1: in Ansicht einen Airbagvorhang in Wirkstellung im Fahrzeuginnenraum vor einer Fahrzeugseitenscheibe,
- Fig. 2: einen Querschnitt einer gasbefüllten Kammer entlang der Linie II-II in Fig. 1, und
- Fig. 3: einen Querschnitt der gasbefüllten Kammer entlang der Linie III-III in Fig. 1.

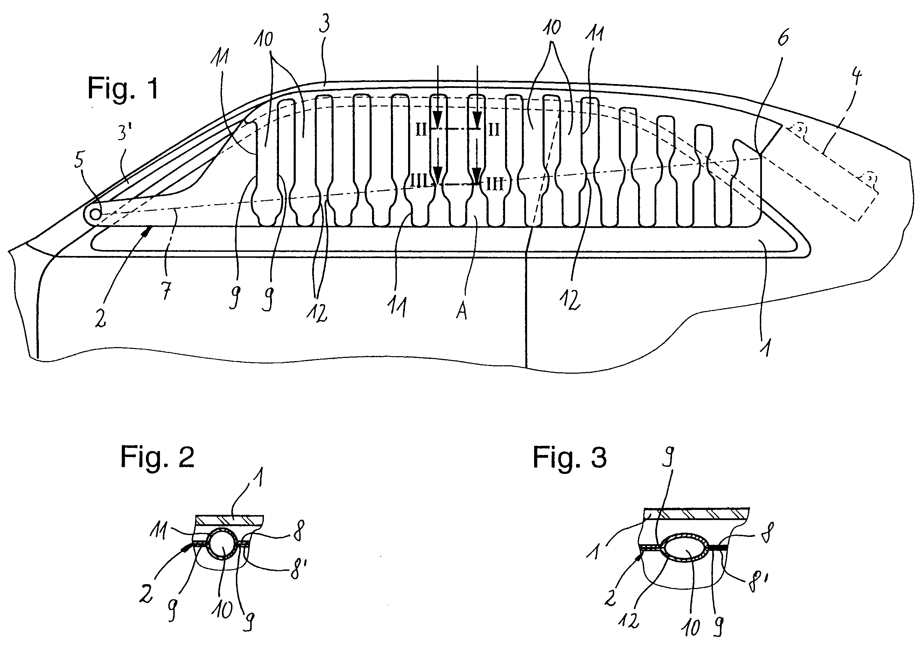

In der Fig. 1 ist in einem Fahrzeuginnenraum vor einer Fahrzeugseitenscheibe 1 ein Airbagvorhang 2 zu sehen, durch den die Fahrzeugseitenscheibe 1 bei einem Crash im Aufprallbereich eines Fahrzeuginsassen überdeckt ist, welcher dadurch vor einem harten Anprall an die Fahrzeugseitenscheibe 1 geschützt wird.

Im üblichen Fahrbetrieb nimmt der Airbagvorhang 2 eine zusammengefaßte Verstauposition entlang einer oberen Begrenzungskante der Fahrzeugseitenscheibe 1 ein, indem er mit seiner vollen Breite in einen am Dachrahmen 3 längsverlaufenden Aufnahmekanal 3' eingefaltet ist.

Beim Crash wird ein hier hinter der Fahrzeuginnenverkleidung im C-Säulen-Bereich angeordneter Gasgenerator 4 aktiviert, der den Airbagvorhang 2 mit Gas befüllt, wodurch dieser aus seinem Aufnahmekanal 3' im Dachrahmen 3 austritt und sich über die Fahrzeugseitenscheibe 1 nach unten in seine Wirkstellung A ausbreitet. Dabei bleibt der Airbagvorhang 2 entlang seiner oberen querverlaufenden Kante am Dachrahmen 3 befestigt, wobei diese Befestigung ebenfalls zwei tieferliegende Befestigungsstellen 5 und 6 an der A-Säule bzw. an der C-Säule umfaßt.

Durch die Befüllung des Airbagvorhanges 2 mit Gas wird hierbei der Airbagvorhang 2 entlang einer strichpunktiert dargestellten Spannungslinie 7 von der Befestigungsstelle 5 an der A-Säule zur Befestigungsstelle 6 an der C-Säule gespannt, und dadurch in seiner Wirkstellung A auch beim Anprall des Insassen sicher vor der Fahrzeugseitenscheibe 1 gehalten.

Der Airbagvorhang ist mit zwei gegenüberliegenden Airbagwänden 8 und 8' gefertigt, welche von gasdichten Begrenzungslinien 9 durchzogen sind, durch die über die Breite des Airbagvorhanges 2 nebeneinander angeordnete und voneinander beabstandete, gasbefüllbare röhrenförmige Kammern 10 ausgebildet sind. Aufgrund dieser einzelnen Kammern 10 wird für die Befüllung des Airbagvorhanges 2 eine geringere Gasmenge notwendig, was für den Seitenaufprall besonders günstig ist, da die Befüllung in kürzerer Zeit und für den Insassen schonender mit geringerem Gasdruck zu erreichen ist.

Nach der Befüllung mit Gas bei einem Crash weisen die Kammern 10 zum größten Teil einen kreisrunden Querschnitt 11 auf, und damit ein maximales Energieaufnahmevermögen bei der Belastung der Kammern 10 durch den Insassen. Der kreisrunde Querschnitt 11 wird mit parallelverlaufenden oder sich gleichmäßig annähernden oder entfernenden Begrenzungslinien 9 erreicht.

Damit der Airbagvorhang 2 in Wirkstellung A vom anprallenden Insassen nicht aus seiner die Fahrzeugseitenscheibe 1 abdeckenden Position gedrängt werden kann, ist der Airbagvorhang 2 mit je einer Seite an der Befestigungsstelle 5 an der A-Säule bzw. an der Befestigungsstelle 6 an der C-Säule festgelegt und durch die Gasbefüllung auch zwischen diesen beiden Befestigungsstellen 5 und 6 entlang der Spannungslinie 7 verspannt und nahe der Fahrzeugseitenscheibe 1 gehalten.

Auf dieser Spannungslinie 7 sind die Kammern 10 durch den Verlauf der Begrenzungslinien 9 mit einer größeren Breite gegenüber den anschließenden Bereichen ausgebildet, die eine Ausbauchung ergibt, durch die sich zwischen den Befestigungsstellen 5 und 6 in diesem Bereich ein ovaler Querschnitt 12 in jeder Kammern 10 etwa in Richtung der Spannungslinie 7 ausbilden kann, und durch welche eine größere Spannkraft zwischen den Befestigungsstellen 5 und 6 herbeiführbar ist, ohne die kreisrunde Querschnittsform 11 der anschließenden Kammerbereiche zu beeinträchtigen.

Durch diese individuelle Ausbildung der Kammern 10 wird im Aufprallbereich des Insassen eine optimale Energieaufnahme durch die kreisrunde Querschnittsform 11 jeder Kammer 10 erreicht, und kann dennoch entlang der Spannungslinie 7 eine maximale Spannung in den Airbagvorhang 2 eingeleitet werden, durch die der Airbagvorhang 2 sicher in seiner Wirkstellung A gehalten wird.

Die Wirkstellung A des Airbagvorhanges 2 kann dann besonders sicher fixiert werden, wenn die Spannungslinie 7 unterhalb des Kopfschwerpunktes eines sitzenden Insassen verlaufend vorgesehen wird.

Die Begrenzungslinien 9 der Kammern 10 können durch ein Vernähen oder Verweben der beiden Airbagwände 8 und 8' einfach hergestellt werden.

## Patentansprüche

1. Airbagvorhang, insbesondere für eine Fahrzeugscheibe, mit mehreren nebeneinander angeordneten, voneinander beabstandeten, gasbefüllbaren röhrenförmigen Kammern, mit nach der Gasbefüllung weitestgehend kreisrundem Querschnitt,
**dadurch gekennzeichnet,**
daß sich der Airbagvorhang (2) in Wirkstellung (A) gasbefüllt zwischen zwei seitlichen Befestigungsstellen (5 und 6) aufspannt, und daß die Kammern (10), die von einer beide Befestigungsstellen (5 und 6) miteinander verbindenden Spannungslinie (7) gekreuzt werden, jeweils im Kreuzungsbereich mit einer Ausbauchung ausgebildet sind, welche einen etwa in Richtung der Spannungslinie (7) orientierten, ovalen Querschnitt (12) ergibt.

2. Airbagvorhang nach Anspruch 1,
**dadurch gekennzeichnet,**
daß die Spannungslinie (7) unterhalb des Kopfschwerpunktes eines sitzenden Insassen verlaufend vorgesehen ist.

3. Airbagvorhang nach Anspruch 1,
**dadurch gekennzeichnet,**
daß die formgebenden Begrenzungslinien (9) der Kammern (10) durch einen Näh- oder Webvorgang ausgebildet sind.

4. Airbagvorhang nach Anspruch 1,
**dadurch gekennzeichnet,**
daß die Begrenzungslinien (9) der Kammern (10) weitestgehend parallelverlaufend ausgebildet sind.

5. Airbagvorhang nach Anspruch 1,
**dadurch gekennzeichnet,**
daß der Airbagvorhang (2) eine zusammengefaßte Verstauposition entlang einer Begrenzungskante der Fahrzeugscheibe (1) einnimmt und durch die Gasbefüllung der Kammern (10) in Wirkstellung überführt und entlang der Spannungslinie (7) zwischen den Befestigungsstellen (5 und 6) gespannt wird.
